# EUROPÄISCHE PATENTSCHRIFT

(11) **EP 1 159 130 B1**
(45) Veröffentlichungstag und Bekanntmachung des Hinweises auf die Patenterteilung: **20.01.2010**
(21) Anmeldenummer: 00907595.3
(22) Anmeldetag: 22.02.2000
(51) Int. Cl.: B32B 38/08

(54) **VERFAHREN ZUR HERSTELLUNG EINER FLÄCHIGEN ZUBEREITUNG MIT WENIGSTENS EINER EINSCHICHTIGEN WIRKSTOFFMATRIX**
METHOD FOR PRODUCING A FLAT PREPARATION WITH AT LEAST ONE SINGLE-LAYER INGREDIENT MATRIX
PROCEDE DE FABRICATION D'UN ARTICLE PLAT DOTE D'AU MOINS UNE MATRICE ACTIVE A UNE SEULE COUCHE

(30) Priorität: 04.03.1999 DE 19909493
(43) Veröffentlichungstag der Anmeldung: 05.12.2001
(73) Patentinhaber: ICS Innovative Care Systems Andernach GmbH, 56626 Andernach (DE)
(72) Erfinder: ROREGER, Michael, D-56567 Neuwied (DE); KLOCZKO, Malgorzata, D-53545 Linz (DE)
(74) Vertreter: Flaccus, Rolf-Dieter
(86) Internationale Anmeldenummer: PCT/EP2000/001438
(87) Internationale Veröffentlichungsnummer: WO 2000/051815

(56) Entgegenhaltungen:
- GB-A- 2 098 541
- GB-A- 2 131 740
- US-A- 5 792 513

## Beschreibung

Die Erfindung betrifft ein Verfahren zur Herstellung einer flächigen Zubereitung mit wenigstens einer einschichtigen Wirkstoffmatrix zur kontrollierbaren Abgabe von Wirkstoff an die Umgebung der Applikationsstelle, wobei die Wirkstoffe ausgewählt sind aus Pflanzenschutzmitteln, Bioziden, Düngemitteln, Pflanzenstärkungsmitteln, kosmetischen Aktivstoffen oder Duftstoffen.

Zubereitungen, deren Herstellung im folgenden beschrieben wird, sind aus vielen Lebensbereichen bekannt, für welche eine nach Zeit und Menge kontrollierte Abgabe von einem oder mehreren Wirkstoffen gefordert wird. Je nach Anwendungsbereich werden sie in Form von flächigen Gebilden wie Etiketten, Strips, Beutelchen, Pflastern oder Tafeln an bestimmte Substrate oder Objekte appliziert, von denen aus sie ihre Wirkung entfalten. Als typische Einsatzgebiete für solche Produkte seien hier beispielsweise Schädlingsbekämpfung z.B. in Weingärten oder in der Forstwirtschaft, oder für Pflanzenschutz, Parfümerie und Kosmetik, genannt.

Wo immer möglich, werden solche Zubereitungen aus Kostengründen so formuliert, daß der Wirkstoff in einem flachen, einschichtigen Polymerfilm enthalten ist, aus dem bei Gebrauch die Freisetzung des Wirkstoffs an den Anwendungsort oder die Anwendungsumgebung erfolgt.
In der Regel haben diese Zubereitungen einen geschichteten Aufbau, wobei sie zumindest eine wirkstoffhaltige Matrixschicht und eine mit ihr in Verbindung stehende Trägerschicht umfassen. Diese Schichten können in einer "sandwich"-artigen Form vorliegen oder sind seitlich miteinander verbunden und beutelartig ausgebildet. Üblicherweise sind sie zusätzlich, je nach Anwendungsbereich, mit verschiedenen funktionellen Schichten wie z.B. Steuermembranen oder Schutzschichten fest oder ablösbar kombiniert.

Verfahren zur Herstellung von Zubereitungen der genannten Art sind bekannt. Solchen aus der Praxis bekannten Herstellverfahren ist gemeinsam, daß die Zubereitung zunächst in Form einer streifenförmigen, die Wirkstoffmatrix umfassenden Bahn hergestellt, anschließend gegebenfalls mit anderen Schichten kombiniert und in Abschnitte der gewünschten Größe durch Stanzen oder Schneiden vereinzelt wird.

Bedingt durch die Vielfalt der mittels dieser Vorrichtungen applizierbaren Wirkstoffe und deren unterschiedliche physiko-chemische Eigenschaften stellt die Herstellung der einschichtigen Wirkstoffmatrix den zentralen Schritt solcher Verfahren dar.
Aus den im Stand der Technik bekannten Verfahren für die Herstellung derartiger Zubereitungen dürfte für den Fachmann das Auflösen oder Dispergieren der Wirkstoffe in Matrixmaterial, das üblicherweise eine Polymerlösung oder - schmelze ist, mit anschließendem Trocknen das Verfahren der Wahl darstellen.
Doch nicht alle Wirkstoffe lassen sich auf diese Weise verarbeiten. Als besonders problematisch gestaltet sich die Verarbeitung flüchtiger Wirkstoffe, da die Verdampfung des Wirkstoffes während der Herstellung kaum zu kontrollieren ist. Auch temperaturempfindliche, sogenannte thermolabile Wirkstoffe, sind bei den, während des Fertigungsprozesses thermisch zu behandelnden Systemen nur bedingt oder nicht einsetzbar.

Aus diesem Grund wurden im Laufe der Zeit verschiedene Lösungswege erarbeitet, um die Herstellung der Abgabematrices insbesondere für flüchtige und/oder thermolabile Wirkstoffe zu ermöglichen. Dabei wird beispielsweise das Prinzip eines Depots genutzt, bei dem problematische Wirkstoffe ohne thermische Belastung, z.B. in einem separaten Verfahrensschritt während der Herstellung als diskretes Wirkstoffreservoir in ein mehrteiliges Produkt eingebracht werden. Solche Verfahren, bei denen das Herstellen wirkstofffreier Matrixschichten und der Eintrag des Wirkstoffes in das Produkt als zeitlich und räumlich getrennte Arbeitsschritte erfolgen, sind aus Fertigung zahlreicher Produkte bekannt, jedoch sehr arbeitsaufwendig.

Dem Stand der Technik entsprechend kann Wirkstoff unter Verwendung verschiedener Techniken in eine Matrix inkorporiert werden. So gehört das Eintragen eines fließfähigen Wirkstoffmediums unter Druckeinwirkung neben dem Eindrücken eines festen Wirkstoffkörpers und einer Injektion zu bekannten Verfahren der Wirkstoffinkorporierung in feste Matrices.
Den erwähnten Verfahren ist gemeinsam, daß Wirkstoff anfänglich auf einen Träger aufgetragen wird, auf dem er lediglich temporär verbleibt, da er in die sich mit ihm in Kontakt befindlichen Matrixschichten einwandert. Bestandteile, die ein unerwünschtes Verlaufen bzw. Auslaufen verhindern und ein vorübergehendes Festhalten des Wirkstoffes zur Aufgabe haben, werden in der Fachliteratur mit Begriffen bezeichnet wie z.B. Adsorptionsschicht, Wirkstoffverteilungseinrichtung, Wirkstoffträger, Fixierhilfe, Stützmaterial bzw. Zwischenlage. Dafür geeignete, flüssigkeitsaufnehmende Substrate sind u.a. Vlies, Schaumstoff, Papier oder textiles Gewebe.

In der Praxis sind bekannte Herstellungsverfahren jedoch häufig mit den im folgenden auswahlweise genannten Nachteilen verbunden und gestalten sich dadurch entsprechend aufwendig:
- Die Aufnahmekapazität von flüssigen Medien ist in der Regel auf ein bestimmtes Maß begrenzt, was häufig einen limitierenden Faktor bei der Matrixwirkstoffbeladung darstellt.
- Um eine kontrollierte, kontinuierliche Wirkstofffreisetzung über längere Applikationszeiträume zu erzielen und unerwünschte Nebenwirkungen durch zu hohe Abgaberaten auszuschalten, ist häufig eine zusätzliche Steuerschicht erforderlich.
- Der Einsatz zusätzlicher Materialien bedeutet einen erhöhten technischen und zeitlichen Aufwand bei der Herstellung, weil zunächst die einzelnen Schichten und Elemente separat voneinander gefertigt und in einem oder mehreren Folgeschritten miteinander kombiniert werden müssen.
- Durch Verwendung zusätzlicher Elemente kann auch die anwendungstechnische Produktqualität insbesondere die Scherstabilität beeinträchtigt werden, weil der Einbau einer Wirkstofffixiereinrichtung die Kontaktfläche zwischen miteinander zu vereinigenden Matrixschichten vermindert. Um dennoch die gewünschte strukturelle Integrität der Zubereitung sicherzustellen, sind nicht selten zusätzliche Verbindungsflächen, z.B. in Form eines umlaufenden Kleberandes erforderlich, die zu einer unerwünschten Vergrößerung der Abmessungen führen.

Die Einbettung von zusätzlichen Stützmaterialien kann sich darüber hinaus auf die Flexibilität und Funktionalität des Produkts negativ auswirken. Dies ist insbesondere dann der Fall, wenn wegen eines geringen Aufnahmevermögens, z.B. der Saugfähigkeit des Materials, dickere Schichten erforderlich sind. Diese Nachteile sind insbesondere im Falle von Wirkstoffpflastern, die an Pflanzenoberflächen angewendet werden, äusserst unerwünscht.

Die Morphologie der höheren Pflanzen, insbesondere geringe Krümmungsradien bzw. unebene und unreine Pflanzenoberflächen, stellt nämlich besonders hohe Anforderungen an die Flexibilität und geringe Dimensionierung solcher Wirkstoffzubereitungen.
Hinzu kommt eine starke Beanspruchung derselben durch natürliche Witterungsbedingungen am Anwendungsort, die ihre Anfälligkeit für einen möglichen Kohäsionsverlust erhöht.

Aufgrund der vorbeschriebenen Nachteile sind mehrschichtige oder mehrteilige Zubereitungen für eine Anzahl von Anwendungen zum einen von ihrer Funktionalität her nicht brauchbar. Zum anderen limitieren die durch den relativ hohen Material- und Fertigungsaufwand bedingten Herstellkosten die Marktgängigkeit bzw. Akzeptanz solcher Produkte. Gerade für wettbewerbsintensive und preissensible Märkte wäre es wünschenswert, auch für temperaturempfindliche und flüchtige Wirkstoffe vergleichsweise einfach konstruierte, preisgünstige Produkte anbieten zu können.

Es ist daher Aufgabe der Erfindung, ein Verfahren zur Herstellung von flächigen, wirkstoffhaltigen Zubereitungen mit einschichtiger wirkstoffhaltiger Matrix zur steuerbaren Abgabe von Wirkstoffen, einschließlich flüchtiger und temperaturempfindlicher Substanzen, bereitzustellen, welches die Nachteile der im Stand der Technik bekannten Verfahren vermeidet.

Die Aufgabe wird erfindungsgemäß durch ein Herstellverfahren entsprechend den im Kennzeichnungsteil von Anspruch 1 genannten Verfahrensschritten gelöst.
Im folgenden wird die Erfindung detailliert beschrieben.

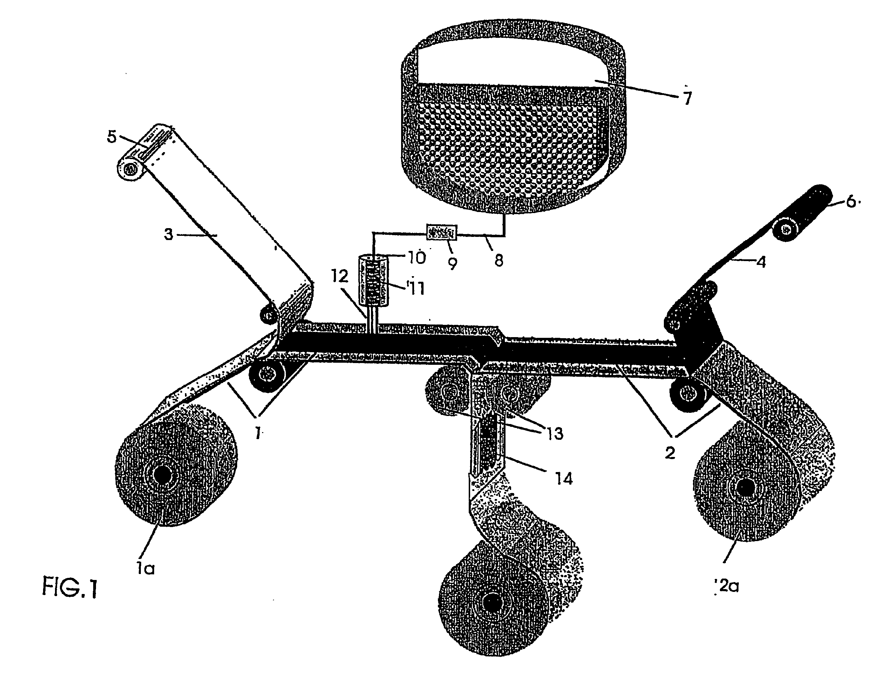

Vorgeschlagen wird ein Verfahren, bei dem die einschichtige Wirkstoffmatrix der Vorrichtung unter Verwendung von mindestens zwei, in ihrer Zusammensetzung gleichartigen Schichten eines Grundmaterials, in folgenden, zeitlich und räumlich voneinander getrennten, Teilschritten hergestellt wird (Bezugszeichen entsprechend Fig. 1):
a) Bereitstellen zweier vorfertigbarer, in ihrer Zusammensetzung gleichartiger Schichten (1,2) eines Grundmaterials,
b) Auftragen von Wirkstoff auf wenigstens eine der beiden Schichten (1,2),
c) Aufeinanderlegen der beiden Schichten (1,2) unter Einschluss des Wirkstoffauftrags und irreversibles Zusammenfügen unter Druckanwendung zu einem Laminat,
d) Lagern des Laminats mit vorgebbarer Dauer unter definierten Bedingungen unter Migration des Wirkstoffs in die Grundschichten (1,2) und Verbinden an deren Grenzflächen unter Ausbildung einer homogenen Matrix mit weitgehend gleichmässiger Wirkstoffverteilung.

Bei Wirkstoffen, die nach diesem Verfahren in die Matrix der Zubereitung eingearbeitet werden, handelt es sich beispielsweise um Pflanzenschutzmittel, Biozide, Düngemittel, Pflanzenstärkungsmittel, kosmetische Aktivstoffe und Duftstoffe. Die Matrixschichten können einen oder mehrere Wirkstoffe enthalten.

"Biozide" sind im Sinne der EG-Biozidrichtlinie, die seit 14. Mai 1998 in Kraft ist, Stoffe oder Zubereitungen, welche bestimmungsgemäß die Fähigkeit besitzen, Lebewesen abzutöten oder zumindest in ihrer Lebensfunktion einzuschränken. Sie werden unter anderem als Holzschutzmittel, Desinfektionsmittel, Prozeßkonservierungsmittel, Insektizide und Rodentizide eingesetzt.
Der Begriff "Pflanzenschutzmittel", der in der vorliegenden Erfindung gleichbedeutend mit "Pestizide" verwendet wird, sowie der Begriff "Pflanzenstärkungsmittel" sind im § 2 des in Deutschland geltenden Pflanzenschutzgesetzes definiert.

Unter dem Begriff "flüchtige Stoffe" werden Substanzen mit bereits bei Raumtemperatur wirksamem Dampfdruck verstanden. Als Beispiel seien hierzu erwähnt: insektizide Verbindungen wie Dimethoat und Acephat oder Insektenpheromone wie z,e-9,12 Tetradecadienol und z,e-9,12 Tetradecadien-1-yl-acetat.

Unter dem Begriff "temperaturempfindliche" bzw. "thermolabile Stoffe" werden in Bezug auf die vorliegende Erfindung Substanzen verstanden, die sich bei einer Temperasur ≥ 50 °C zersetzen oder in ihrer biologischen Wirksamkeit beeinträchtigt werden.

Bei dem erfindungsgemäßen Verfahren entsteht die einschichtige Wirkstoffmatrix durch direktes Einbringen von Wirkstoff zwischen gleichartige Matrixschichten, die anschlie-Bend durch Druck vereinigt und zwecks "Reifung" gelagert werden. Der Hauptvorteil dieses Verfahrens liegt im Verzicht auf die Verwendung von zusätzlichen Wirkstofffixierhilfen, wodurch der Material- und Fertigungsaufwand erheblich reduziert und gleichzeitig die funktionelle Qualität der so hergestellten Produkte signifikant verbessert wird. Als ein bei der Raumtemperatur ablaufender Fertigungsprozeß ist dieses Verfahren besonders wertvoll bei der Herstellung von Vorrichtungen mit flüchtigen und thermolabilen Substanzen.

Vorteilhafte Ausgestaltungen des Verfahrens nach dem Hauptanspruch kann der Fachmann den Merkmalen der Unteransprüche entnehmen.
Sie betreffen z.B. eine Volumendosierung des Wirkstoffs, den erforderlichen Arbeitsdruck beim Einwirkenlassen von Wirkstoff in die Matrixschicht, weitere Verfahrensparameter bei der "Reifung" der Matrix, die Art und Weise des Wirkstoff Ein- bzw. Auftrags, die stoffliche Grundlage des Matrixgrundmaterials, besondere Eigenschaften des Wirkstoffs und seine Bezeichnungen.

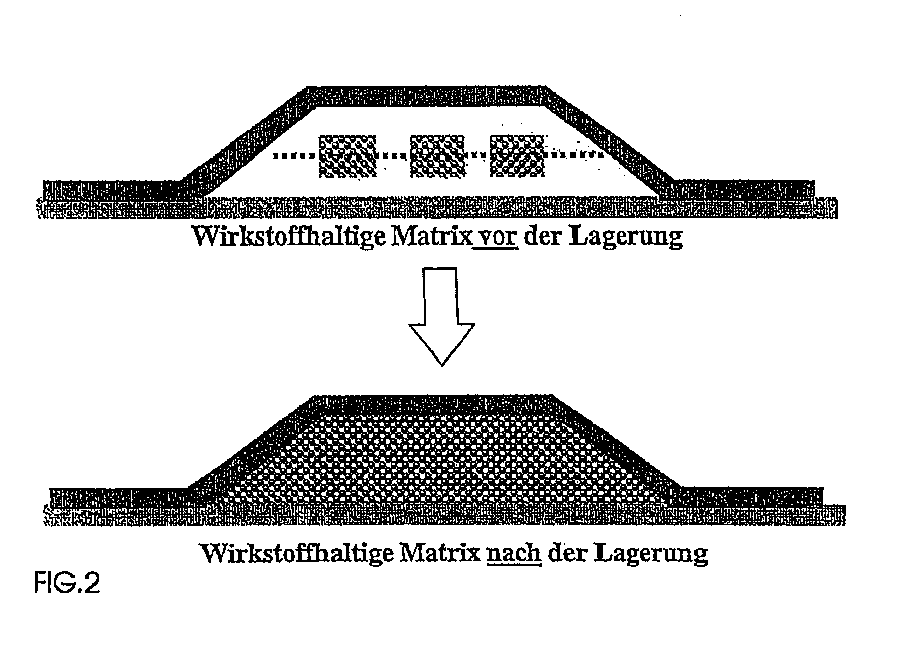

Das Prinzip der Erfindung ist in Fig.1 anhand eines Verfahrens-Stammbaumes näher erläutert, während die Fig. 2 im Schnitt die wirkstoffhaltige Matrix vor und nach der Lagerung zeigt.

In Fig.1 bezeichnen (1) und (2) gleichartige Schichten des Matrixgrundmaterials, die als streifenformige Bahnen in Form von Laminaten auf Vorratsrollen (1a; 2a) vorliegen. Beide Schichten (1, 2) sind zweckmäßigerweise beidseitig mit Schutzschichten (3, 4) ausgerüstet, von denen zumindest eine (3) ablösbar ist. Die Schutzschichten (3, 4) können aus verschiedenen Materialien wie Papier, Kunststoff, Textilien bestehen, müssen jedoch - beispielsweise durch eine Silikonbehandlung - ablösbar gemacht werden. Dies ist insbesondere von Bedeutung, wenn die Matrixschichten (1, 2) selbstklebend sind.
Vor dem Auftragen des Wirkstoffs werden beide vorgefertigten Grundmaterialschichten (1, 2) freigelegt, indem die entfernbaren Schutzschichten (3, 4) abgezogen und von entsprechenden Aufwicklungen (5,6) aufgenommen werden.

Eine andere Möglichkeit der Ausgestaltung des erfindungsgemäßen Verfahrens besteht beispielsweise darin, daß die Grundmaterialschichten (1, 2) nur mit einer Bahn versehen sind, die beidseitig matrixabweisend ausgerüstet ist, und somit als "in sich gewickelte" Laminatrollen vorliegen.

Bei dem erfindungsgemäßen Verfahren wird Wirkstoff in Form eines fließfähigen Mediums dosiert. Das Wirkstoffmedium befindet sich in einem Vorratsbehälter (7), der über einen Schlauch (8) mit einer Dosierstation (10) verbunden ist. Somit befindet sich das Wirkstoffmedium in einem geschlossenen System, was insbesondere bei flüchtigen Stoffen von entscheidener Bedeutung ist.

Für die Förderung des Wirkstoffmediums in die Dosierstation (10) sorgt eine Zuführeinheit (9), die bei dem erfindungsgemäßen Verfahren z. B. eine Schlauchpumpe sein kann. Es können jedoch auch andere für eine Dosierung geeignete Pumpenarten wie Zahnrad-, Schraubenspindel-, Kreisel- oder Kolbenpumpen eingesetzt werden. Wesentlich im Sinne der Erfindung ist, daß die Zuführeinheit eine pulsationsfreie Förderung bei dosierbarer Fördermenge und konstantem Druck gewährleistet. Ein gleichmäßiger Förderstrom ist für eine gleichmäßige Versorgung der Dosierstation (10) mit dem Wirkstoffmedium unerläßlich.

Die Dosierstation (10) besteht bei dem erfindungsgemäßen Verfahren beispielsweise aus einem Wirkstoffdispenser (11) und einer oder mehreren Auftragsdüsen (12).
Als Wirkstoffdispenser (11) können bei dem erfindungsgemä-Ben Verfahren z.B. sogenannte NEMO-Robo-Dispenser eingesetzt werden, die nach dem Prinzip rotierender Verdrängerpumpen arbeiten. Dieses Funktionsprinzip des Dispensers ist für das Herstellverfahren vorteilhaft, denn die Fördermenge des Wirkstoffmediums ist direkt von der Rotordrehzahl abhängig; sie kann stufenlos geändert und den Anforderungen des Verfahrens problemlos angepaßt werden. Unterschiedliche Baugrößen können verschiedenen "Dosiermengenbereichen" zuordnet werden; infolge der rotierenden Arbeitsweise bleibt der auf das Wirkstoffmedium ausgeübte Druck konstant.
Die Einhaltung des gleichmäßigen Druckes, der ≤ 12 bar beträgt, ist für die Dosiergenauigkeit von erfindungswesentlicher Bedeutung.

Ein weiterer Vorteil dieses Dispensers (11) liegt in der Möglichkeit des Reversierens der Förderrichtung, was einen kurzen Fadenabriß zur Folge hat. Dadurch wird eine Medienanhäufung an den Endpunkten des Auftrages vermieden und eine gleichmäßige Verteilung des Wirkstoffmediums auf der bahnförmigen Matrix (14) sichergestellt.
Dies ist für Zubereitungen nach dem erfindungsgemäßen Verfahrens von besonderer Bedeutung. Eine ungleichmäßige Verteilung des Wirkstoffes würde zwischen den Grundmaterialschichten (1, 2) eine inhomogene Wirkstoffverteilung in der Matrix des Fertigprodukts zur Folge haben und im Endeffekt das gewünschte Wirkstofffreigabeprofil negativ beeinflussen

Für die gleichmäßige Verteilung der Wirkstoffzubereitung sorgen bei diesem Verfahren die Auftragsdüsen (12). Ihre Anzahl und Anordnung sind so gewählt, daß die zur Verfügung stehende Matrixfläche ebenmäßig mit Wirkstoffmedium versehen wird. Zweckmäßigerweise kann der Auftrag in Mustern wie Streifen, Punkten, Kreisen oder anderen geometrischen Formen angeordnet werden.
Diese können sowohl in intermittierender als auch rotativer Arbeitsweise erzeugt werden, wobei die zuletzt erwähnte vorzuziehen ist, da sie in der Regel höhere Produktionsgeschwindigkeiten ermöglicht.

Bei dem erfindungsgemäßen Herstellungsverfahren werden Wirkstoffe in Form eines fließfähigen Mediums dosiert, wobei dessen Viskosität in breiten Grenzen variieren kann, jedoch mindestens 1000 mPa.s beträgt. Bei Flüssigkeiten mit niedriger Viskosität kann es nämlich zu unerwünschtem Verlaufen des Mediums auf der Matrix kommen. Dieser negative Effekt würde beim anschliessenden Kaschieren unter Druck zusätzlich verstärkt werden. Bei Einstellung der gewünschten Mindestviskosität sind z. B. viskositätserhöhende Zusätze, wie z.B. AEROSIL ® oder Polymere hilfreich, die entweder natürlichen Ursprungs, wie z.B. Gelatine, Stärkederivate oder synthetischen Ursprungs, wie z.B Polyacrylsäure, sein können.

Zur Einstellung des gewünschten Viskositätsbereiches wird zweckmäßig die Auftragsvorrichtung temperiert.

Der unmittelbar nach dem Zudosieren des Wirkstoffs stattfindende Kaschiervorgang kann erfindungsgemäß bei einem Druck zwischen 2 und 10 bar ausgeführt werden. Als besonders vorteilhaft ist der Druckbereich 3-5 bar zu nennen. Beim Kaschieren werden beide Grundmaterialschichten (1, 2) zusammengefügt und durch Druckeinwirkung irreversibel verbunden. Der Kaschierdruck muß dabei so gewählt werden, daß das Wirkstoffmedium an den Rändern der bandförmigen Matrix (14) nicht austritt und die Grenzflächen der Grundmaterialschichten (1, 2) untrennbar verbunden werden.

Eine besonders vorteilhafte Möglichkeit der Gestaltung des erfindungsgemäßen Herstellverfahrens besteht darin, daß Grundmaterialschichten (1, 2) und die daraus entstehende Matrix (14) selbstklebend ausgerüstet sind. Dies erleichtert wesentlich die Ausbildung der einschichtigen Matrix (14) und erhöht zusätzlich die Scherstabilität des Fertigproduktes.
Bei der Durchführung des Herstellverfahrens kann auch das Wirkstoffmediumklebende Eigenschaften aufweisen. Dies kann der Fachmann durch klebrigmachende Zusätze, wie z.B. Harze problemlos erzielen.

Die bei dem Verfahren verwendeten matrixbildenden Schichten (1, 2) können aus verschiedenen Materialien bestehen. Wesentlich für die Erfindung ist jedoch, daß sie hinsichtlich ihrer Zusammensetzung identisch sind und ein Polymer oder Polymergemisch enthalten. Grundsätzlich kommen alle Polymere in Frage, die Wirkstoffe aufnehmen und freigeben können und sich zu Filmen verarbeiten lassen. Als besonders geeignete Matrixpolymere sind hierzu zu nennen: Ethylen-Vinylacetat-Copolymere, Blockcopolymere, z.B. Styrol/Butadien/- Styrol oder Styrol/Isopren/Styrol, Polyisobutylen, Polyacrylate, Polymethacrylate, Polyvinylester, Polyamid, Polyester, Cellulosederivate und Silikone.
Die Auswahl des Polymers für Grundmaterialschichten (1, 2) richtet sich nach den chemischen und physikalischen Eigenschaften des Wirkstoffs.

Als Wirkstoffe können je nach Verwendung der Zubereitung nach der Erfindung Substanzen aus verschiedenen Stoffgruppen, wie z.B. Pflanzenschutzmittel, Biozide, Düngemittel, Pflanzenstärkungsmittel, kosmetische Aktivstoffe und Duftstoffe, eingesetzt werden. Die nach Zudosieren und Kaschieren in der Mitte der Matrix (14) fest eingeschlossenen Wirkstoffe gemäß Abbildung 2 diffundieren in Übereinstimmung mit den Fickschen Diffusionsgesetzen, bis sie eine weitgehend gleichmäßige Verteilung innerhalb der Matrix (14) erreicht haben. Dieser Vorgang, die sogenannte "Reifung" ist wirkstoffspezifisch sowie zeit-und temperaturabhängig und kann vom Fachmann bestimmt werden. Vorteilhafte Ausführungsformen enthalten einen oder mehrere der Wirkstoffe Dimethoat, Imidacloprid, Fenpropidin, Acephat und Acetamiprid.

Durch die Art der Arbeitsparameter bei der Laminatlagerung kann die Dauer dieser Phase des erfindungsgemäßen Herstellverfahrens auf eine gewünschte Zeit verkürzt werden. Dabei ist jedoch wichtig, daß die Lagertemperatur den für den jeweiligen Wirkstoff kritischen Bereich nicht überschreitet. Als günstige Lagertemperatur ist der Bereich 15- 30 °C und insbesondere 20-24 °C zu nennen.

In Abwandlung des erfindungsgemäßen Verfahrens kann die Wirkstoffmatrix (14) nach abgeschlossener Reifungslagerung bei einer Temperatur zwischen 3 und 10 °C gekühlt werden. Dieses beeinflußt positiv die Kohäsion und somit die Scherfestigkeit der Matrix (14) und begünstigt ihre mechanische Festigkeit beim Stanzen bzw. Schneiden.

Die erfindungsgemäß hergestellte einschichtige Matrix gemäß Abbildung 2 wird in weiteren Prozeßschritten mit anderen Funktionsschichten kombiniert und anschließend zu einzelnen pflasterartigen Zubereitungen konfektioniert.

Nachfolgend wird die Erfindung anhand eines Beispiels, das eine bevorzugte Ausführungsform der Erfindung darstellt, beschrieben.

### Beispiel

In Abb.1 ist die Bahn (1a) ein beispielsweise 54 mm breites Laminat, das,von unten nach oben gesehen, aus einer 36 µm dicken PET-Trägerfolie, einer 125 g/m² starken Grundmaterialschicht aus Polyacrylat und einer silikonisierten Schutzschicht (Papier 95 g/m²), besteht. Die zweite Bahn Laminat (2a) hat ebenfalls die Breite von 54 mm und umfaßt, von unten nach oben gesehen, 95 g/m² starkes silikonisiertes Papier, eine 125 g/m² starke Grundmaterialschicht, identisch mit der des Laminates (1a), und eine 80 µm dicke silikonisierte PE-Schutzfolie.
Vor dem Dosieren werden die Schutzschichten (3, 4) der beiden Laminate (1a 2a) abgezogen und von den Aufwicklungen (5) und (6) aufgenommen. Die verbleibenden Laminate werden ins Kaschierwerk (13) so eingezogen, daß die bahnförmige Grundmaterialschicht des Laminates (1a) mit der auf der Gegenwalze liegenden Bahn kongruent ist.

Die Wirkstoffzubereitung mit einer Viskosität von 1100 mPa.s, die 52,46 Gew.% Dimethoat, 34,76 Gew.% N-methylpyrrolidon und 12,78 Gew.% kolloidales Siliziumdioxid enthält, wird mittig auf den Grundmaterialstreifen (Polyacrylatfilm) des Laminates (1a) mittels dreier Auftragsdüsen (12) kontinuierlich dosiert, wobei die Dosierung bei einer Pumpendrehzahl 850 Upm und einer Maschinenlaufgeschwingkeit von 20 m/min erfolgt. Es werden Wirkstoffmengen von 0,386 g auf 0,64 m des Laminates (1a) aufgebracht. Unmittelbar nach dem Zudosieren des Wirkstoffmediums wird dieses mit der zweiten Grundmaterialschicht (2a) abgedeckt. Dieser als Kaschieren bezeichnete Vorgang wird unter einem Druck von 3 bar ausgeführt.
Das so erhaltene dimethoathaltige Matrixlaminat (14) wird 14 Tage bei 20 °C zwecks Reifung und anschließend 24 Stunden bei 6 °C gelagert.

Die Fertigstellung der Zubereitung durch Vereinen der Matrix (14) mit einer Endabdeckung sowie die nachfolgende Konfektionierung erfolgen in einer Stanz- und Konfektionieranlage.

## Patentansprüche

1. Verfahren zum Herstellen einer flächigen Zubereitung mit wenigstens einer einschichtigen Wirkstoffmatrix zur kontrollierbaren Abgabe von Wirkstoff an die Umgebung der Applikationsstelle, wobei die Wirkstoffe ausgewählt sind aus Pflanzenschutzmitteln, Bioziden, Düngemitteln, Pflanzenstärkungsmitteln, kosmetischen Aktivstoffen oder Duftstoffen, **dadurch gekennzeichnet, daß** die Matrix unter Verwendung wenigstens zweier in ihrer Zusammensetzung gleichartiger Schichten (1, 2) eines Grundmaterials in den zeitlich und räumlich getrennten Schritten hergestellt wird:
a) Bereitstellen zweier vorfertigbarer, in ihrer Zusammensetzung gleichartiger Schichten (1, 2) eines Grundmaterials,
b) Auftragen von Wirkstoff auf wenigstens eine der beiden Schichten (1, 2),
c) Aufeinanderlegen der beiden Schichten (1, 2) unter Einschluss des Wirkstoffauftrags und irreversibles Zusammenfügen unter Druckanwendung zu einem Laminat,
d) Lagern des Laminats mit vorgebbarer Dauer unter definierten Bedingungen unter Migration des Wirkstoffs in die Grundschichten (1, 2) und Verbinden an deren Grenzflächen unter Ausbildung einer homogenen Matrix mit weitgehend gleichmässiger Wirkstoffverteilung.

2. Verfahren nach Anspruch 1, **dadurch gekennzeichnet, daß** eine Volumendosierung des Wirkstoffmediums durch Einwirkenlassen bei einem Druck ≤ 12 bar vorgenommen wird.

3. Verfahren nach Anspruch 1 oder 2, **dadurch gekennzeichnet, daß** das Zusammenfügen der Grundmaterialschichten (1, 2) unter einer Kaschierpressung zwischen 2 und 10 bar, bevorzugt zwischen 3 und 5 bar vorgenommen wird.

4. Verfahren nach einem oder mehreren der Ansprüche 1 bis 3, **dadurch gekennzeichnet, daß** die Lagerung der wirkstoffhaltigen Matrix (14) bei einer Temperatur zwischen 15 und 30 °C, bevorzugt zwischen 20-24 °C, mit einer Dauer von mindestens 48 Stunden vorgenommen wird.

5. Verfahren nach einem oder mehreren der Ansprüche 1 bis 4, **dadurch gekennzeichnet, daß** Wirkstoff in Form eines fliessfähigen Mediums mit einer Viskosität von mindestens 1000 mPa.s aufgetragen wird.

6. Verfahren nach Anspruch 5, **dadurch gekennzeichnet, daß** Wirkstoffmedium mit einem Anteil von Hilfsstoffen aufgetragen wird.

7. Verfahren nach einem oder mehreren der Ansprüche 1 bis 6, **dadurch gekennzeichnet, daß** der Wirkstoffauftrag kontinuierlich oder intermittierend vorgenommen wird.

8. Verfahren nach einem oder mehreren der Ansprüche 1 bis 7, **dadurch gekennzeichnet, daß** die wirkstoffhaltige Matrix (14) selbstklebend ausgerüstet wird.

9. Verfahren nach einem oder mehreren der Ansprüche 1 bis 8, **dadurch gekennzeichnet, daß** zwischen die Matrix-Grundmaterialschichten (1, 2) flüchtige oder thermolabile Wirkstoffe inkorporiert werden.

10. Verfahren nach einem oder mehreren der Ansprüche 1 bis 9, **dadurch gekennzeichnet, daß** als Matrixgrundmaterial wenigstens ein Polymer aus einer der Gruppen wie folgt ausgewählt wird: Ethylen-Vinylacetat-Copolymer, Blockcopolymer, z.B. Styrol/Butadien/Styrol oder Strol/Isopren/Styrol, Polyisobutylen, Polyacrylate, Polymethacrylate, Polyvinylester, Polyamid, Polyester, Cellulosederivate und Silikone.

11. Verfahren nach einem oder mehreren der Ansprüche 1 bis 10, **dadurch gekennzeichnet, daß** ein Wirkstoffmedium verwendet wird, welches klebrigmachende Substanzen enthält.

12. Verfahren nach einem oder mehreren der Ansprüche 1 bis 11, **dadurch gekennzeichnet, daß** ein Wirkstoff verwendet wird, der ein Gemisch aus z,e-9,12 Tetradecadienol und z,e-9,12 Tetradecadien-1-yl-acetat ist.

13. Verfahren nach einem oder mehreren der Ansprüche 1 bis 12, **dadurch gekennzeichnet, daß** die Matrixschichten einen oder mehrere Wirkstoffe enthalten.

14. Verfahren nach einem oder mehreren der Ansprüche 1 bis 13, **dadurch gekennzeichnet, daß** in die Matrix mindestens einer der Wirkstoffe Dimethoat, Imidacloprid, Fenpropidin, Acephat und Acetamiprid inkorporiert wird.

15. Verfahren nach einem oder mehreren der Ansprüche 1 bis 14, **dadurch gekennzeichnet, daß** das Wirkstoffmedium in regelmässiger oder unregelmässiger Flächenverteilung auf wenigstens eine der Matrixschichten (1, 2), z.B. auch in Form von Mustern oder Streifen, aufgetragen wird.

## Claims

1. Process for producing a sheetlike formulation comprising at least one single-layer active substance matrix for the controlled release of active substance to the vicinity of the application site, the active substances being selected from crop protection agents, biocides, fertilizers, plant strengtheners, cosmetic active principles and fragrances, **characterized in that** the matrix is produced using at least two layers (1, 2), identical in composition, of a base material in the following temporally and spatially separate steps:
a) provision of two prefabricable layers (1,2), identical in composition, of a base material,
b) application of active substance to at least one of the two layers (1,2),
c) placement of the two layers (1,2) atop one another so as to enclose the active substance applied, and irreversible joining under pressure to form a laminate,
d) storage of the laminate for predeterminable duration under defined conditions, with migration of the active substance into the base layers (1,2), and connection at their interfaces to form a homogenous matrix featuring substantially uniform distribution of active substance.

2. Process according to Claim 1, **characterized in that** volumetric metering of the active substance medium is performed by admitting it at a pressure ≤ 12 bar.

3. Process according to Claim 1 or 2, **characterized in that** the joining of the base material layers (1, 2) is performed under a laminating pressure of between 2 and 10 bar, preferably between 3 and 5 bar.

4. Process according to one or more of Claims 1 to 3, **characterized in that** the storage of the active substance-containing matrix (14) is performed at a temperature of between 15 and 30°C, preferably between 20-24°C, with a duration of at least 48 hours.

5. Process according to one or more of Claims 1 to 4, **characterized in that** active substance is applied in the form of a flowable medium having a viscosity of at least 1000 mPa.s.

6. Process according to Claim 5, **characterized in that** active substance medium is applied with a fraction of excipients.

7. Process according to one or more of Claims 1 to 6, **characterized in that** the application of active substance is performed continuously or intermittently.

8. Process according to one or more of Claims 1 to 7, **characterized in that** the active substance-containing matrix (14) is made self-adhesive.

9. Process according to one or more of Claims 1 to 8, **characterized in that** volatile or thermally labile active substances are incorporated between the base material layers (1, 2) of the matrix.

10. Process according to one or more of Claims 1 to 9, **characterized in that** at least one polymer from one of the following groups is selected as the matrix base material: ethylene-vinyl acetate copolymer, block copolymer, e.g. styrene/butadiene/styrene or styrene/isoprene/styrene, polyisobutylene, polyacrylates, polymethacrylates, polyvinyl esters, polyamide, polyesters, cellulose derivatives and silicones.

11. Process according to one or more of Claims 1 to 10, **characterized in that** an active substance medium is used which comprises tackifying substances.

12. Process according to one or more of Claims 1 to 11, **characterized in that** an active substance is used which is a mixture of Z,E-9,12-tetradecadienol and Z, E-9,12-tetradecadien-1-yl acetate.

13. Process according to one or more of Claims 1 to 12, **characterized in that** the matrix layers comprise one or more active substances.

14. Process according to one or more of Claims 1 to 13, **characterized in that** at least one of the active substances dimethoate, imidacloprid, fenpropidine, acephate and acetamiprid is incorporated into the matrix.

15. Process according to one or more of Claims 1 to 14, **characterized in that** the active substance medium is applied in regular or irregular areal distribution onto at least one of the matrix layers (1, 2), including its application, for example, in the form of patterns or stripes.

## Revendications

1. Procédé pour la fabrication d'une préparation plane comprenant au moins une matrice monocouche contenant une ou plusieurs substances actives pour la libération contrôlable de la ou des substances actives aux alentours de l'endroit d'application, les substances actives étant choisies parmi des agents de protection des plantes, des biocides, des engrais, des agents de renforcement des plantes, des substances actives cosmétiques ou des parfums, **caractérisé en ce qu'**on prépare la matrice en utilisant au moins deux couches (1, 2) d'une matière de base, possédant une composition de même type, dans les étapes séparées dans le temps et dans l'espace :
a) de procuration de deux couches (1, 2) d'une matière de base, qui peuvent être préfabriquées et qui possèdent une composition de même type ;
b) d'application d'une ou de plusieurs substances actives sur au moins une des deux couches (1, 2) ;
c) de superposition des deux couches (1, 2) par incorporation de l'application d'une ou de plusieurs substances actives et par assemblage irréversible en exerçant de la pression pour obtenir un stratifié :
d) d'entreposage du stratifié pendant un laps de temps prédéfinissable dans des conditions définies avec migration de la substance active dans les couches de base (1, 2) et de liaison à l'interface de ces dernières avec formation d'une matrice homogène possédant une distribution de substance active largement uniforme.

2. Procédé selon la revendication 1, **caractérisé en ce qu'**on procède à un dosage en volume du milieu faisant office de substance active en laissant agir sous une pression de ≤ 12 bar.

3. Procédé selon la revendication 1 ou 2, **caractérisé en ce qu'**on procède à l'assemblage des couches de la matière de base (1, 2) par contrecollage sous une pression entre 2 et 10 bar, de préférence entre 3 et 5 bar.

4. Procédé selon une ou plusieurs des revendications 1 à 3, **caractérisé en ce qu'**on procède à l'entreposage de la matrice (14) contenant une ou plusieurs substances actives à une température entre 15 et 30 °C, de préférence entre 20 et 24 °C, pendant un laps de temps d'au moins 48 heures.

5. Procédé selon une ou plusieurs des revendications 1 à 4, **caractérisé en ce qu'**on applique la ou les substances actives sous la forme d'un milieu apte à l'écoulement, possédant une viscosité d'au moins 1000 mPa.s.

6. Procédé selon la revendication 5, **caractérisé en ce qu'**on applique le milieu faisant office de substance active avec une teneur en substances auxiliaires.

7. Procédé selon une ou plusieurs des revendications 1 à 6, **caractérisé en ce qu'**on procède à l'application de la substance active en continu ou de manière intermittente.

8. Procédé selon une ou plusieurs des revendications 1 à 7, **caractérisé en ce qu'**on rend autoadhésive la matrice (14) contenant une ou plusieurs substances actives.

9. Procédé selon une ou plusieurs des revendications 1 à 8, **caractérisé en ce qu'**on incorpore des substances actives volatiles ou thermolabiles entre les couches de la matière de base (1, 2) constituant la matrice.

10. Procédé selon une ou plusieurs des revendications 1 à 9, **caractérisé en ce qu'**on sélectionne comme matière de base matricielle au moins un polymère parmi un des groupes ci-après : un copolymère d'éthylène-acétate de vinyle, des copolymères séquencés par exemple du styrène/butadiène/styrène ou du styrène/isoprène/styrène, du polyisobutylène, des polyacrylates, des polyméthacrylates, des esters polyvinyliques, du polyamide, du polyester, des dérivés de la cellulose et des silicones.

11. Procédé selon une ou plusieurs des revendications 1 à 10, **caractérisé en ce qu'**on utilise un milieu faisant office de substance active qui contient des substances rendant adhésif.

12. Procédé selon une ou plusieurs des revendications 1 à 11, **caractérisé en ce qu'**on utilise une substance active qui représente un mélange du z,e-9,12 tétradécadiénol et du z,e-9,12 tétradécadién-1-yl-acétate.

13. Procédé selon une ou plusieurs des revendications 1 à 12, **caractérisé en ce que** les couches matricielles contiennent une ou plusieurs substances actives.

14. Procédé selon une ou plusieurs des revendications 1 à 13, **caractérisé en ce qu'**on incorpore dans la matrice au moins une des substances actives que sont le diméthoate, l'imidacloprid, la fenpropidine, l'acéphate et l'acétamiprid.

15. Procédé selon une ou plusieurs des revendications 1 à 14, **caractérisé en ce qu'**on applique le milieu faisant office de substance active sous la forme d'une distribution superficielle régulière ou irrégulière sur au moins une des couches matricielles (1, 2), par exemple également sous la forme de motifs ou de bandes.
